# EUROPEAN PATENT APPLICATION

(11) **EP 4 776 404 A1**
(43) Date of publication of application: **15.07.2026**
(21) Application number: 25864603.3
(22) Date of filing: 08.09.2025
(51) Int. Cl.: H01M 50/24, H01M 50/282, A62C 3/16, A62D 1/00, H01M 50/278, H01M 50/291

(54) **BATTERY PACK**

(30) Priority: 25.10.2024 KR 20240147317
(71) Applicant: LG ENERGY SOLUTION, LTD., Seoul 07335 (KR)
(72) Inventor: LEE, Jung Hoon, Daejeon 34122 (KR); JUNG, Hye Mi, Daejeon 34122 (KR); KIM, Kwang Mo, Daejeon 34122 (KR); LEE, Joo Hyoung, Daejeon 34122 (KR)
(74) Representative: Plasseraud IP
(86) International application number: PCT/KR2025/013879
(87) International publication number: WO 2026/089282

(57) **Abstract**

According to exemplary embodiments, a battery pack is provided. The battery pack may include: a plurality of battery cells arranged in a first direction inside a pack housing; a plurality of separators interposed between the plurality of battery cells and having a height greater than the height of each of the plurality of battery cells; and an upper cover disposed on top of the plurality of battery cells and the plurality of separators and including a base and a plurality of accommodating parts protruding from the base to accommodate each of the plurality of separators. The upper cover may include: a thermoplastic case; and a fire extinguishing agent within the thermoplastic case.

## Description

### [Technical Field]

The present disclosure relates to a battery pack. This application claims the benefit of Korean Patent Application No. 10-2024-0147317, filed on October 25, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

In the current trend where secondary batteries for mobility are emphasized, the main directions of secondary battery technology development are cost reduction and safety enhancement. Secondary batteries account for the largest portion of BEV manufacturing costs. Therefore, the most important factor in increasing the market share of BEVs compared to internal combustion engine vehicles is the production cost of secondary batteries. Cost reduction can be achieved through reduction of raw materials, reduction in the number of production process steps, and reduction of takt time. The safety of secondary batteries is very important as it is directly related to the lives of mobility passengers. A major task for enhancing the safety of secondary batteries is the provision of a cooling solution for battery packs.

### [Summary]

### [Technical Problem]

The problem to be solved by the technical idea of the present disclosure is to provide a battery pack with enhanced safety.

### [Technical Solution]

According to exemplary embodiments of the present disclosure for solving the above-mentioned problem, a battery pack is provided. The battery pack may include: a plurality of battery cells arranged in a first direction inside a pack housing; a plurality of separators interposed between the plurality of battery cells and having a height greater than the height of each of the plurality of battery cells; and an upper cover disposed on top of the plurality of battery cells and the plurality of separators and including a base and a plurality of accommodating parts protruding from the base to accommodate each of the plurality of separators. The upper cover may include: a thermoplastic case; and a fire extinguishing agent within the thermoplastic case.

The fire extinguishing agent may include one or more among carbon dioxide, an inert gas, a halogenated compound, and a non-conductive solid.

The melting temperature of the thermoplastic case may be 100°C or higher and 200°C or lower.

The base may overlap with the plurality of battery cells in a vertical direction.

A lower surface of the base may be spaced apart from an upper surface of each of the battery cells in the vertical direction.

A lower surface of each of the battery cells may be positioned at the same level as a lower surface of each of the plurality of separators in a vertical direction. An upper surface of each of the battery cells may be positioned at a lower level than an upper surface of each of the plurality of separators in the vertical direction.

Sealed spaces may be formed between the plurality of battery cells and the base between the plurality of separators adjacent in the first direction.

The battery pack may further include a module frame including: a bottom plate; side plates connected to the bottom plate and perpendicular to the bottom plate; and a top plate connected to each of the side plates and spaced apart from the bottom plate in a vertical direction. The module frame may be accommodated in an internal space of the pack housing. The plurality of battery cells and the plurality of separators may be accommodated in an internal space of the module frame.

The top plate may include a plurality of holes. Each of the plurality of holes may overlap with the base in the vertical direction.

The base may overlap with the plurality of battery cells in the vertical direction.

The thickness of the upper cover may be uniform.

The thickness of the upper cover may be 0.5 mm or more and 1.0 mm or less.

### [Advantageous Effects]

According to exemplary embodiments of the present disclosure, by sealing battery cells mounted in a battery pack by region and providing a fire extinguishing agent for each region, thermal propagation and thermal runaway inside the battery pack can be prevented.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view of a battery pack according to exemplary embodiments.
FIGS. 2 to 6 are enlarged cross-sectional views of a battery pack according to exemplary embodiments.
FIG. 7 is a cross-sectional view of a battery pack according to exemplary embodiments.
FIG. 8 is an enlarged cross-sectional view of a battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

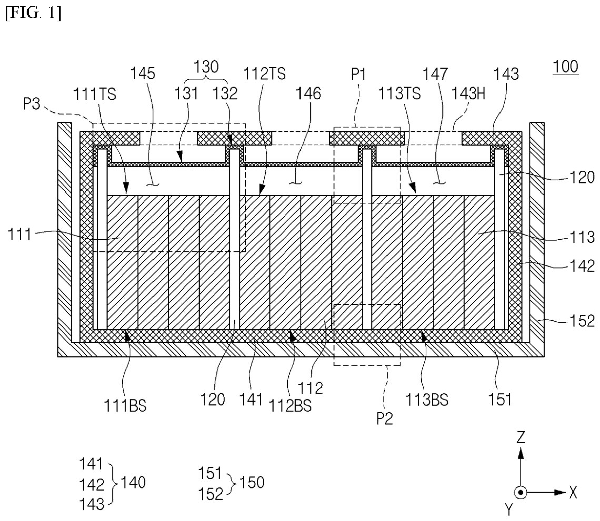

FIG. 1 is a cross-sectional view showing a battery pack 100 according to exemplary embodiments.

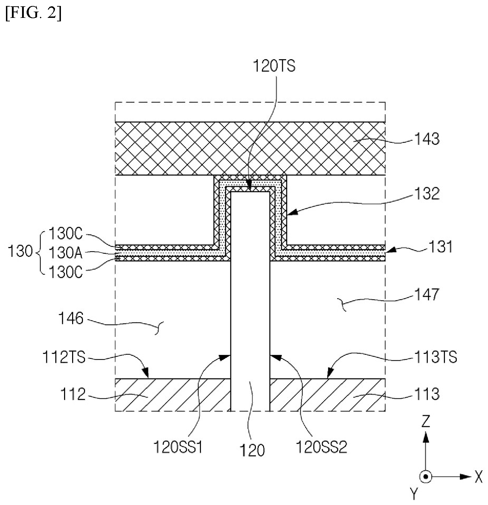

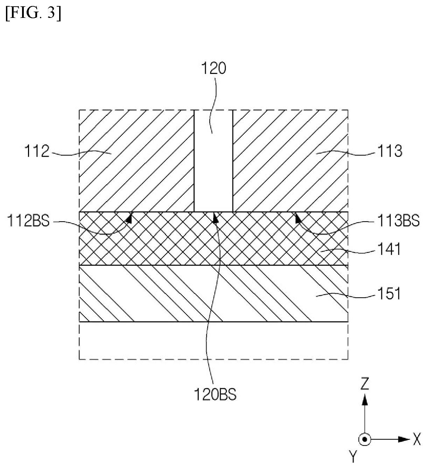

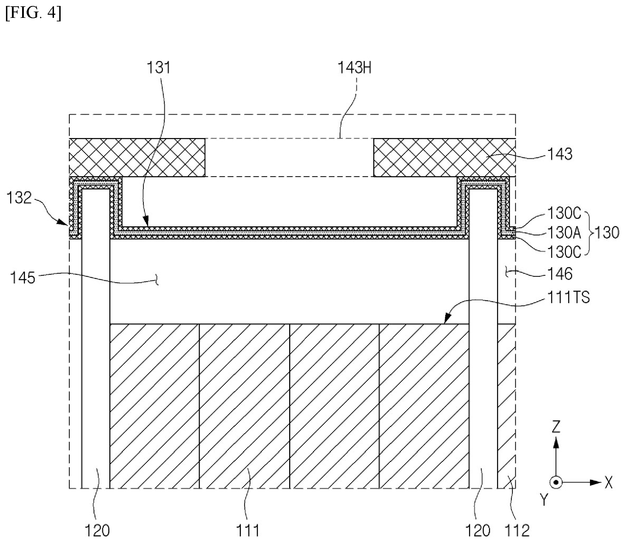

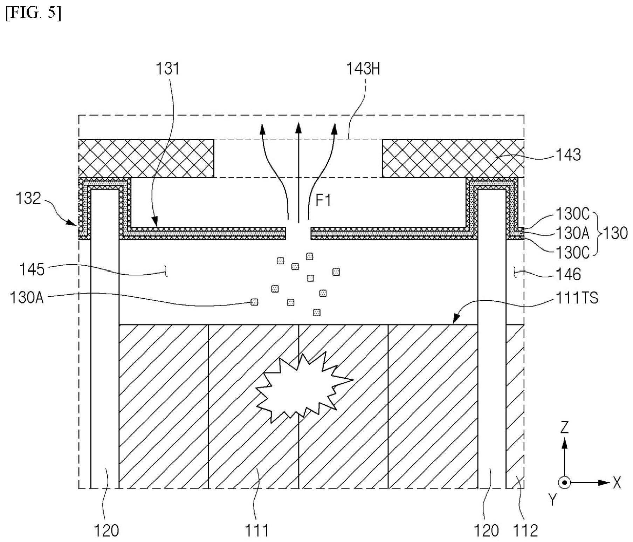

FIGS. 2 to 5 are enlarged cross-sectional views showing the battery pack 100 according to exemplary embodiments. FIG. 2 is an enlarged view of P1 in FIG. 1. FIG. 3 is an enlarged view of P2 in FIG. 1. FIGS. 4 and 5 each show an enlarged view of P3 in FIG. 1. FIG. 4 shows the battery pack 100 in a normal state, and FIG. 5 shows the battery pack 100 in a fire state.

Referring to FIGS. 1 to 5, the battery pack 100 may include a plurality of battery cells 111, 112, 113, a plurality of separators 120, an upper cover 130, a module frame 140, and a pack housing 150.

The battery cells 111, 112, 113 may be accommodated in the internal space of the pack housing 150. The battery cells 111, 112, 113 may be stacked in the X direction. According to exemplary embodiments, each of the plurality of battery cells 111, 112, 113 may be bidirectional cells. That is, the positive electrode terminal of each of the plurality of battery cells 111, 112, 113 may be disposed at one end, and the negative electrode terminal of each of the plurality of battery cells 111, 112, 113 may be disposed at the other end. Those skilled in the art will be able to easily arrive at embodiments in which each of the plurality of battery cells 111, 112, 113 is a unidirectional cell based on what is described herein.

Each of the plurality of battery cells 111, 112, 113 includes an electrode assembly, an electrolyte solution, and a case covering them. The case may be a pouch case or a prismatic case. The pouch case may include an aluminum laminate sheet. The prismatic case may include a metal material such as aluminum. The prismatic case may have a rectangular parallelepiped shape.

The electrode assembly embedded in the case may include a positive electrode, a negative electrode, and a separator interposed between the positive electrode and the negative electrode. The electrode assembly may be either a jelly-roll type or a stack-type depending on the assembly form. A jelly-roll type electrode assembly may include a wound structure of a positive electrode, a negative electrode, and a separator interposed therebetween. A stack-type electrode assembly may include a plurality of positive electrodes, a plurality of negative electrodes, and a plurality of separators interposed therebetween that are sequentially stacked.

The separators 120 may separate the battery cells 111, 112, 113. Each of the separators 120 may be interposed between the battery cells 111, 112, 113 or may be disposed in contact with the outermost battery cells in the X direction among the battery cells 111, 112, 113. Each of the separators 120 may be in contact with adjacent battery cells 111, 112, 113 on one side or both sides. The plurality of battery cells 111, 112, 113 and the plurality of separators 120 may form a cell stack.

The plurality of separators 120 may include a compressible material. The plurality of separators 120 may absorb swelling of the plurality of battery cells 111, 112, 113. The plurality of separators 120 may be thermal barriers. According to exemplary embodiments, each of the plurality of separators 120 may have a high melting temperature and low thermal conductivity. According to exemplary embodiments, each of the plurality of separators 120 may include flame retardant materials such as ceramics and coated glass materials. According to exemplary embodiments, the plurality of separators 120 may be configured to release fire retarding materials and fire extinguishing agents when a thermal runaway event occurs.

Each of the separators 120 may include an upper surface 120TS and a lower surface 120BS. Each of the battery cells 111 may include an upper surface 111TS and a lower surface 111BS. Each of the battery cells 112 may include an upper surface 112TS and a lower surface 112BS. Each of the battery cells 113 may include an upper surface 113TS and a lower surface 113BS.

The height of each of the separators 120 along the Z direction may be greater than the height of each of the battery cells 111, 112, 113 along the Z direction. The lower surface 120BS of each of the separators 120 may be positioned at substantially the same level in the Z direction as each of the lower surfaces 111BS, 112BS, 113BS of the battery cells 111, 112, 113. The upper surface 120TS of each of the separators 120 may be positioned at a higher level than each of the upper surfaces 111TS, 112TS, 113TS of the battery cells 111, 112, 113. The lower surface 120BS of each of the separators 120, the lower surface 111BS of each of the battery cells 111, the lower surface 112BS of each of the battery cells 112, and the lower surface 113BS of each of the battery cells 113 may be on the upper surface of the bottom plate 141 of the module frame 140. According to exemplary embodiments, a resin layer such as silicone may be further included between the battery cells 111, 112, 113 and the bottom plate 141. The resin layer between the battery cells 111, 112, 113 and the bottom plate 141 may protect the battery cells 111, 112, 113 by absorbing external physical shocks.

The upper cover 130 may be positioned on top of the battery cells 111, 112, 113 and the separators 120 in the Z direction. The upper cover 130 may overlap with the battery cells 111, 112, 113 in the Z direction.

The upper cover 130 may include a base 131 and a plurality of accommodating parts 132 protruding from the base 131 in the Z direction. The base 131 may be spaced apart from the upper surfaces 111TS, 112TS, 113TS of the plurality of battery cells 111, 112, 113 in the Z direction. Each of the accommodating parts 132 may accommodate each of the separators 120. Each of the accommodating parts 132 may be in contact with a portion of the first side surface 120SS1, the upper surface 120TS, and a portion of the second side surface 120SS2 of each of the separators 120. Each of the accommodating parts 132 of the upper cover 130 may be in contact with the lower surface of the top plate 143.

The upper cover 130 may be interposed between the plurality of battery cells 111, 112, 113 and the top plate 143. There may be a sealed space 145 between the lower surface of the base 131 and the upper surface 111TS of each of the battery cells 111. There may be a sealed space 146 between the lower surface of the base 131 and the upper surface 112TS of each of the battery cells 112. There may be a sealed space 147 between the lower surface of the base 131 and the upper surface 113TS of each of the battery cells 113. The sealed spaces 145, 146, 147 may be separated from each other by the separators 120 in the X direction. The sealed spaces 145, 146, 147 may not be connected to each other.

The upper cover 130 may include a case 130C and a fire extinguishing agent 130A. The fire extinguishing agent 130A may be accommodated in the internal space of the case 130C.

The case 130C may extend along the base 131 and the plurality of accommodating parts 132. The case 130C may include a thermoplastic material. The case 130C may include an insulating material. In exemplary embodiments, the case 130C may include plastic. In exemplary embodiments, the case 130C may include polypropylene (PP), polyethylene (PE), or polyvinyl chloride (PVC) as plastic materials.

According to exemplary embodiments, the melting temperature of the case 130C may be about 90°C or higher. According to exemplary embodiments, the melting temperature of the case 130C may be about 110°C or higher. According to exemplary embodiments, the melting temperature of the case 130C may be about 130°C or higher. According to exemplary embodiments, the melting temperature of the case 130C may be about 250°C or lower. According to exemplary embodiments, the melting temperature of the case 130C may be about 200°C or lower. According to exemplary embodiments, the melting temperature of the case 130C may be about 160°C or lower.

The fire extinguishing agent 130A may be accommodated in the case 130C extending along the base 131 and the plurality of accommodating parts 132. When a fire event occurs in one of the battery cells 111, 112, 113, the fire extinguishing agent 130A may be sprayed onto the battery cells 111, 112, 113 to suppress the fire. The fire extinguishing agent 130A may block the oxygen supply to prevent the fire from spreading to adjacent battery cells. The fire extinguishing agent 130A may absorb heat generated by the fire to suppress combustion.

According to exemplary embodiments, the fire extinguishing agent 130A may include one or more of gas type, powder type, liquid type, and solid type. According to exemplary embodiments, the fire extinguishing agent 130A may be carbon dioxide (CO₂). According to exemplary embodiments, the fire extinguishing agent 130A may be an inert gas such as nitrogen (N₂) or argon (Ar). According to exemplary embodiments, the fire extinguishing agent 130A may be a halogenated compound. According to exemplary embodiments, the fire extinguishing agent 130A may include one or more of bromotrifluoromethane (CBrF₃), bromochlorodifluoromethane (CBrClF₂), heptafluoropropane (C₃HF₇), pentafluoroethane (C₂HF₅), and dichlorotrifluoroethane (C₂HCl₂F₃). According to exemplary embodiments, the fire extinguishing agent 130A may be sodium bicarbonate (NaHCO₃) or a phosphate-based powder. According to exemplary embodiments, the fire extinguishing agent 130A may be a liquid coolant or water. According to exemplary embodiments, the fire extinguishing agent 130A may be a non-conductive solid such as sand or vermiculite.

The upper cover 130 may have a substantially uniform thickness. According to exemplary embodiments, the thickness of the upper cover 130 may be about 0.3 mm or more. According to exemplary embodiments, the thickness of the upper cover 130 may be about 0.5 mm or more. According to exemplary embodiments, the thickness of the upper cover 130 may be about 0.8 mm or more. According to exemplary embodiments, the thickness of the upper cover 130 may be about 2.0 mm or less. According to exemplary embodiments, the thickness of the upper cover 130 may be about 1.5 mm or less. According to exemplary embodiments, the thickness of the upper cover 130 may be about 1.0 mm or less. The thickness of the upper cover 130 is not limited to the above and may be changed according to the number, weight, etc. of the battery cells 111, 112, 113.

The battery pack 100 includes sealed spaces 145, 146, 147, so that when an ignition event occurs in some of the battery cells 111, 112, 113, heat generated from the ignited battery cell can be prevented from propagating to adjacent battery cells.

For example, as shown in FIG. 5, when a fire event occurs in some of the battery cells 111, the heat generated from the ignited battery cells is accommodated in the sealed space 145 and can be prevented from propagating to adjacent sealed spaces 146, 147. Due to the heat generated from the battery cells 111, a portion of the case 130C of the upper cover 130 may melt. As a result, the fire extinguishing agent 130A accommodated inside the case 130C may be sprayed onto the battery cells 111. The fire extinguishing agent 130A sprayed onto the battery cells 111 may suppress the fire that occurred in the battery cells 111. The fire extinguishing agent 130A sprayed onto the battery cells 111 may lower the oxygen concentration in the ignition area and delay heat propagation through an endothermic reaction. The heat generated by the fire may be diffused through the hole 143H of the top plate 143, as shown by F1 in FIG. 5. As a result, thermal propagation and thermal runaway inside the battery pack 100 can be prevented.

The upper cover 130 may be configured to protect the battery cells 111, 112, 113 from external physical shocks together with the module frame 140. For example, when the top plate 143 of the module frame 140 is damaged by an external physical shock, the battery cells 111, 112, 113 are protected by the upper cover 130, so that the battery cells 111, 112, 113 can be prevented from being exposed to the outside. The risk of the battery cells 111, 112, 113 being damaged by physical shock and the electrodes being exposed to the outside can be prevented.

### (Second embodiment)

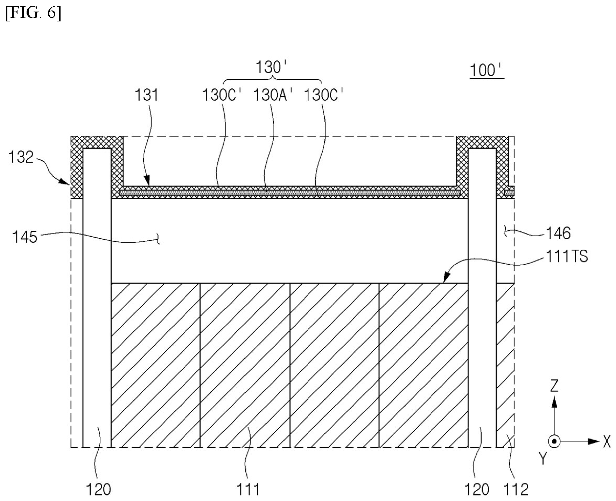

FIG. 6 is a cross-sectional view showing a battery pack 100' according to exemplary embodiments. FIG. 6 is an enlarged cross-sectional view of a portion corresponding to P3 in FIG. 1. In FIG. 6, components having the same reference numerals as FIGS. 1 to 5 may apply the description described above in the first embodiment, and the same description will be omitted. Hereinafter, the components of the second embodiment that are different from the first embodiment will be mainly described.

Referring to FIGS. 1 and 6 together, the battery pack 100' may include battery cells 111, 112, 113 and an upper cover 130' on the separators 120. The upper cover 130' may include a base 131 and a plurality of accommodating parts 132. The base 131 may include a case 130C' and a fire extinguishing agent 130A' accommodated inside the case 130C'. The fire extinguishing agent 130A' may be accommodated only inside the base 131 that overlaps with the battery cells 111, 112, 113. The accommodating parts 132 may not include the fire extinguishing agent 130A'.

### (Third embodiment)

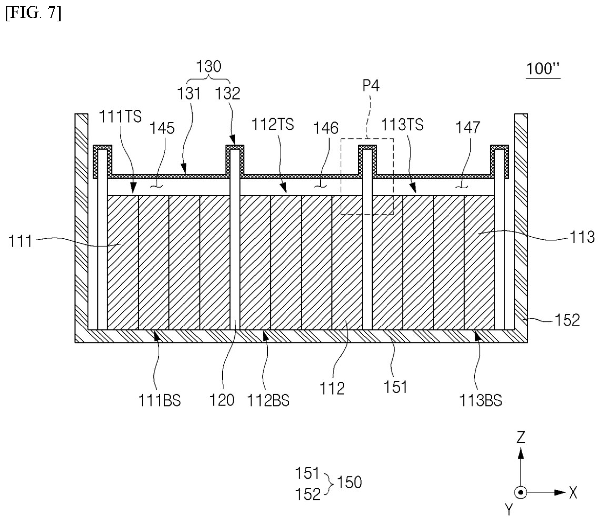

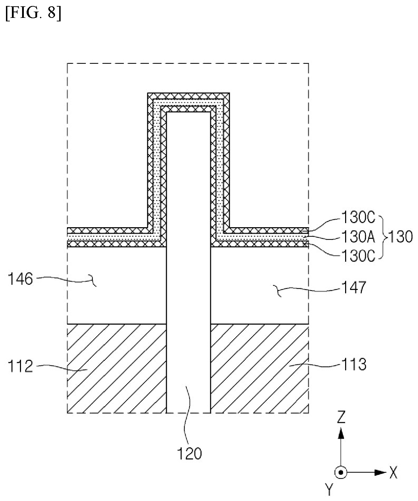

FIG. 7 is a cross-sectional view showing a battery pack 100" according to exemplary embodiments. FIG. 8 is an enlarged cross-sectional view showing the battery pack 100" according to exemplary embodiments. FIG. 8 is an enlarged view of P4 in FIG. 7.

In FIGS. 7 and 8, components having the same reference numerals as FIGS. 1 to 5 may apply the description described above in the first embodiment, and the same description will be omitted. Hereinafter, the components of the third embodiment that are different from the first embodiment will be mainly described.

The battery pack 100" may be a module-less type battery pack (or cell-to-pack structure). That is, the battery pack 100" may not include the module frame (140 in FIG. 1). The lower surfaces 111BS, 112BS, 113BS of each of the battery cells 111, 112, 113 may be in contact with the upper surface of the bottom part 151 of the pack housing 150. The lower surface 120BS of each of the separators 120 may be in contact with the upper surface of the bottom part 151 of the pack housing 150. According to exemplary embodiments, a resin layer may be interposed between the battery cells 111, 112, 113 and the bottom part 151. One surface of the resin layer may be in contact with the lower surfaces 111BS, 112BS, 113BS of each of the battery cells 111, 112, 113 and the lower surface 120BS of each of the separators 120. The other surface of the resin layer may be in contact with the upper surface of the bottom part 151.

When a fire event occurs in one of the battery cells 111, 112, 113, the case 130C of the upper cover 130 melts, and the fire extinguishing agent 130A accommodated in the case 130C may be sprayed onto the ignited battery cell. As a result, a hole may be generated in the upper cover 130. Through the hole generated in the upper cover 130, the heat generated by the ignited battery cell may be diffused inside the battery pack 100" and discharged to the outside of the battery pack 100".

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a plurality of battery cells arranged in a first direction inside a pack housing;
a plurality of separators interposed between the plurality of battery cells and having a height greater than the height of each of the plurality of battery cells; and
an upper cover disposed on top of the plurality of battery cells and the plurality of separators and comprising a base and a plurality of accommodating parts protruding from the base to accommodate each of the plurality of separators, wherein
the upper cover comprises:
a thermoplastic case; and
a fire extinguishing agent within the thermoplastic case.

2. The battery pack of claim 1, wherein
the fire extinguishing agent comprises one or more among carbon dioxide, an inert gas, a halogenated compound, and a non-conductive solid.

3. The battery pack of claim 1, wherein
the melting temperature of the thermoplastic case is 100°C or higher and 200°C or lower.

4. The battery pack of claim 1, wherein
the base overlaps with the plurality of battery cells in a vertical direction.

5. The battery pack of claim 4, wherein
a lower surface of the base is spaced apart from an upper surface of each of the battery cells in the vertical direction.

6. The battery pack of claim 1, wherein
a lower surface of each of the battery cells is positioned at the same level as a lower surface of each of the plurality of separators in a vertical direction, and
an upper surface of each of the battery cells is positioned at a lower level than an upper surface of each of the plurality of separators in the vertical direction.

7. The battery pack of claim 1, wherein
sealed spaces are formed between the plurality of battery cells and the base between the plurality of separators adjacent in the first direction.

8. The battery pack of claim 1, further comprising a module frame comprising:
a bottom plate;
side plates connected to the bottom plate and perpendicular to the bottom plate; and
a top plate connected to each of the side plates and spaced apart from the bottom plate in a vertical direction, wherein
the module frame is accommodated in an internal space of the pack housing, and
the plurality of battery cells and the plurality of separators are accommodated in an internal space of the module frame.

9. The battery pack of claim 8, wherein
the top plate comprises a plurality of holes, and
each of the plurality of holes overlaps with the base in the vertical direction.

10. The battery pack of claim 9, wherein
the base overlaps with the plurality of battery cells in the vertical direction.

11. The battery pack of claim 1, wherein
the thickness of the upper cover is uniform.

12. The battery pack of claim 1, wherein
the thickness of the upper cover is 0.5 mm or more and 1.0 mm or less.
